# EUROPEAN PATENT APPLICATION

(11) **EP 3 985 642 A1**
(43) Date of publication of application: **20.04.2022**
(21) Application number: 20821717.4
(22) Date of filing: 13.03.2020
(51) Int. Cl.: G08G 1/16, G06T 7/00, H04N 7/18

(54) **OUTSIDE ENVIRONMENT RECOGNITION DEVICE**

(30) Priority: 14.06.2019 JP 2019111349
(71) Applicant: MAZDA MOTOR CORPORATION, Hiroshima 730-8670 (JP)
(72) Inventor: HAMANO Daisuke, Aki-gun, Hiroshima 730-8670 (JP)
(74) Representative: Frick, Robert
(86) International application number: PCT/JP2020/011260
(87) International publication number: WO 2020/250519

(57) **Abstract**

An external environment recognition device includes: a physical layer circuit (111) that receives an external environment signal; a logical layer circuit (112) that constructs a data row based on the external environment signal received in the physical layer circuit (111); an environmental data generator (121) that generates environmental data of an autonomous mobile object from the data row; a movement scene determination unit (131) that determines a movement scene of the autonomous mobile object based on the environmental data; and a thinning processing unit (132) that decides a thinning method corresponding to the movement scene determined in the movement scene determination unit (131) and that performs thinning processing on at least one of the data row or the environmental data.

## Description

### TECHNICAL FIELD

The technology disclosed herein belongs to a technical field of an external environment recognition device for use in an autonomous mobile object.

### BACKGROUND ART

In recent years, research and development have been made on autonomous mobile objects that move, travel, fly, etc. (simply hereinafter "move" may be used as a collective term) while recognizing the external environment. These autonomous mobile objects use a sensing device, such as a camera, to recognize the external environment, and determine a moving direction, a moving speed, etc., based on the result of the recognition. The amount and accuracy of data acquired by the sensing device affect the operation accuracy of the autonomous mobile objects. For example, in a case in which a camera is used as a sensing device, using more cameras or high-precision cameras, etc., expands the range of image capturing, improves image quality, and increases a frame rate, which contributes to enhancing the operation accuracy of the autonomous movement. In particular, as in a case of a motor vehicle with autonomous driving functions, it is desirable to analyze and process high-quality image data in a relatively short time to ensure sufficient safety even in a situation where the moving speed is relatively high. However, high-quality images or high frame rate images involve a large amount of data to be dealt, which increases a load on an arithmetic processing unit that processes the data and may cause concern of heat dissipation or the like. Thus, it is desirable that the amount of processing data is small in the arithmetic processing unit.

In view of this, it is conceivable to thin out some frames of the captured image data, but if the image data is thinned out too much, the control performance of the autonomous mobile object may decrease.

Patent Document 1 discloses an obstacle detection device in which in order to reduce a processing load on the image analysis with the least possible deterioration of the detection accuracy and the like, an entire region of a monitoring range in an image in each frame is sectioned into a plurality of small regions, and the obstacle detection device uses, as an analysis target, only images of the plurality of sections located at a certain position in the entire region to compare the image in the present frame with the image in the previous frame, thereby detecting a motion vector.

Patent Document 2 discloses a rear side monitoring device for a vehicle which selectively uses a first image processing means and a second image processing means depending on a situation. The first image processing means thins out image information with respect to the entire road image obtained through an imaging means. The second image processing means does not thin out image information with respect to part of the region of the road image obtained through the imaging means.

### CITATION LIST

### PATENT DOCUMENT

Patent Document 1: Japanese Unexamined Patent Publication No. 2010-262357
Patent Document 2: Japanese Unexamined Patent Publication No. 2000-251080

### SUMMARY OF THE INVENTION

### TECHNICAL PROBLEM

However, such methods as those disclosed in Patent Documents 1 and 2 may result in a loss of information necessary for movements of the autonomous mobile objects due to the thinning processing.

For example, the technique of Patent Document 1 requires a reduction in the number of blocks to be analyzed in each frame in order to reduce the load on the image analysis processing, which results in an increase in the number of blocks in each frame which are not analyzed. The number of blocks to be analyzed in each frame may be secured in order to improve the analysis accuracy to some extent, which however results in a small reduction amount of processing load.

The technique of Patent Document 2 performs thinning processing on the entire road image; therefore, information necessary for movements of the autonomous mobile object may be lost by the thinning processing in a region, for example, other than the region where the image processing is performed by the second image processing means.

It is therefore an object of the technology disclosed herein to reduce a load on the processing of an arithmetic unit with the least possible loss of information necessary for movements of an autonomous mobile object.

### SOLUTION TO THE PROBLEM

To achieve the above object, an aspect of the technology disclosed herein is directed to an external environment recognition device that controls traveling of a vehicle. The external environment recognition device includes: a physical layer circuit that receives an external environment signal from an external information acquisition device that acquires external environment information of the autonomous mobile object, the external environment signal including the external environment information; a logical layer circuit that constructs a data row based on the external environment signal received in the physical layer circuit; an environmental data generator that generates environmental data of the autonomous mobile object from the data row; a movement scene determination unit that determines a movement scene of the autonomous mobile object based on the environmental data; and a thinning processing unit that decides a thinning method corresponding to the movement scene determined in the movement scene determination unit and that performs thinning processing on at least one of the data row or the environmental data.

Another aspect of the technology disclosed herein is directed to an external environment recognition device that includes: a physical layer circuit that receives an imaging signal of an imaging device that captures an outside of the autonomous mobile object; a logical layer circuit that constructs a data row from the imaging signal received in the physical layer circuit; an image data generator that generates image data from the data row; a movement scene determination unit that determines a movement scene based on an output of an external information acquisition device that acquires external environment information of the autonomous mobile object; and a thinning processing unit that decides a thinning method corresponding to the movement scene determined in the movement scene determination unit and that performs thinning processing on at least one of the data row or the image data.

According to these configurations described above, the traveling scene determination unit determines a traveling scene; a thinning method is decided based on the result of the determination; and thinning processing is performed by the decided method. That is, thinning processing can be performed when it has turned out which type of traveling scene the data represents, in other words, when it has turned out whether or not the data represents circumstances where thinning causes no problem. It is therefore possible to reduce the amount of data to be processed by the arithmetic unit with the least possible loss of necessary information and reduce a load on the processing of the arithmetic unit.

The movement scene determination unit may determine a moving speed of the autonomous mobile object as the movement scene of the autonomous mobile object, and as the thinning method, the thinning processing unit may increase a thinning rate of the thinning processing as the moving speed decreases.

Excessive data processing is therefore avoided while the autonomous mobile object is traveling at low speed.

As the thinning method, the thinning processing unit may set a thinning rate of the thinning processing to be higher when the movement scene determination unit determines, as the movement scene, that a vehicle as the autonomous mobile object is being stopped or parked, than when the vehicle is traveling normally.

The higher thinning rate can avoid excessive data processing during the stopping or parking of the vehicle.

### ADVANTAGES OF THE INVENTION

As can be seen from the foregoing description, the technology disclosed herein carries out thinning processing by a thinning method corresponding to a movement scene. It is therefore possible to reduce a load on the processing of an arithmetic unit with the least possible loss of information necessary for movements of an autonomous mobile object.

### BRIEF DESCRIPTION OF THE DRAWINGS

FIG. 1 is a block diagram showing a control system of a motor vehicle having an external environment recognition device on board.
FIG. 2 schematically shows a vehicle having an information display device for vehicle on board.
FIG. 3 is a block diagram showing a configuration of the external environment recognition device.
FIG. 4 is a flowchart showing an example operation of the external environment recognition device.
FIG. 5 is a flowchart showing an example operation of the external environment recognition device.

### DESCRIPTION OF EMBODIMENT

An exemplary embodiment will now be described in detail with reference to the drawings. In the following embodiment, a motor vehicle having autonomous driving functions will be described as an example of the autonomous mobile object. The external environment recognition device of the present disclosure is applicable not only to a motor vehicle, but also to autonomous mobile objects, such as autonomous mobile robots, vacuum cleaners, and drones.

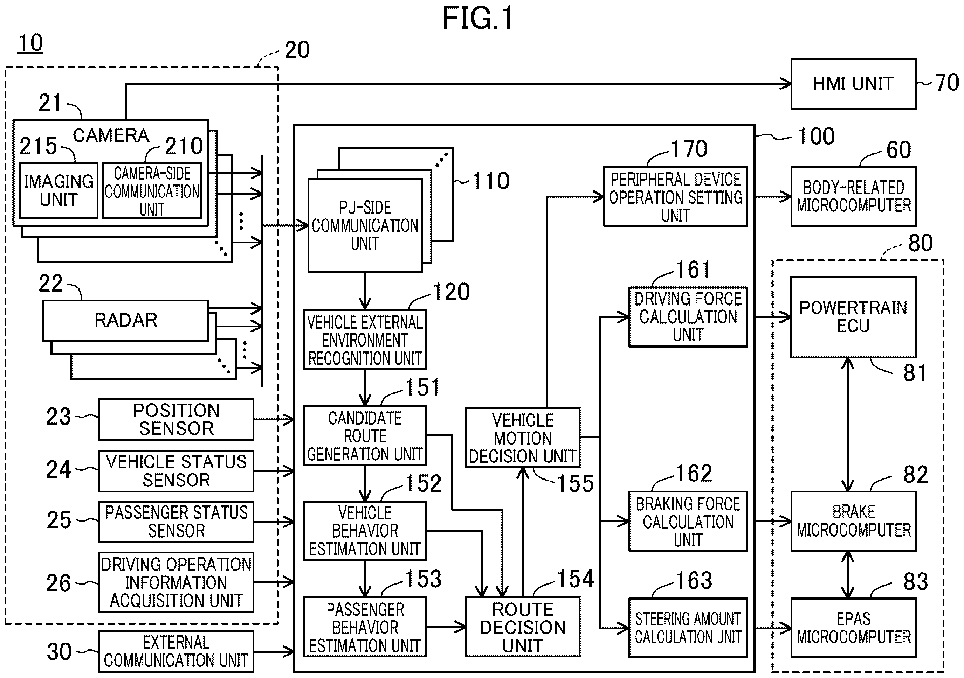

FIG. 1 is a block diagram schematically showing a configuration of a control system of a vehicle 10 of the present embodiment. The vehicle 10 is configured to be capable of assisted driving and autonomous driving.

To achieve the assisted driving and autonomous driving, the vehicle 10 of the present embodiment includes an arithmetic unit 100 that calculates a route to be traveled by the vehicle 10 and determines motions of the vehicle 10 so that the vehicle 10 follows the route, based on outputs from a sensing device 20 or on information from a network outside the vehicle. The arithmetic unit 100 is a microprocessor comprised of one or more chips, and includes a CPU, a memory, and the like. Note that FIG. 1 mainly shows a configuration to exert the route generating function of the present embodiment, and does not necessarily show all the functions the arithmetic unit 100 has.

The sensing device 20 that outputs information to the arithmetic unit 100 includes, for example: (1) a plurality of cameras 21 that are provided to the body or the like of the vehicle 10 and that take images of the vehicle's external environment; (2) a plurality of radars 22 that are provided to the body or the like of the vehicle 10 and that detect a target or the like outside the vehicle 10; (3) a position sensor 23 that detects the position of the vehicle 10 (vehicle position information) by using a Global Positioning System (GPS); (4) a vehicle status sensor 24 that acquires a status of the vehicle 10 and that includes outputs from sensors detecting the behavior of the vehicle, such as a vehicle speed sensor, an acceleration sensor, and a yaw rate sensor; (5) an occupant status sensor 25 that is comprised of an in-vehicle camera or the like and that acquires a status of an occupant on the vehicle 10; and (6) a driving operation information acquisition unit 26 for detecting the driving operation of the driver. In addition, the arithmetic unit 100 receives communication information from another vehicle around the subject vehicle 10 or traffic information from a navigation system through an external communication unit 30 connected to a network outside the vehicle.

The cameras 21 are arranged to image the surroundings of the vehicle 10 at 360° in the horizontal direction. Each of the cameras 21 outputs the image data generated to the arithmetic unit 100.

Specifically, each of the cameras 21 includes a camera-side communication unit 210 that communicates with the arithmetic unit 100, and an imaging unit 215 that captures optical images showing the vehicle's external environment, using an imaging device, such as charged-coupled devices (CCDs) and a complementary metal oxide semiconductor (CMOS), to generate image data.

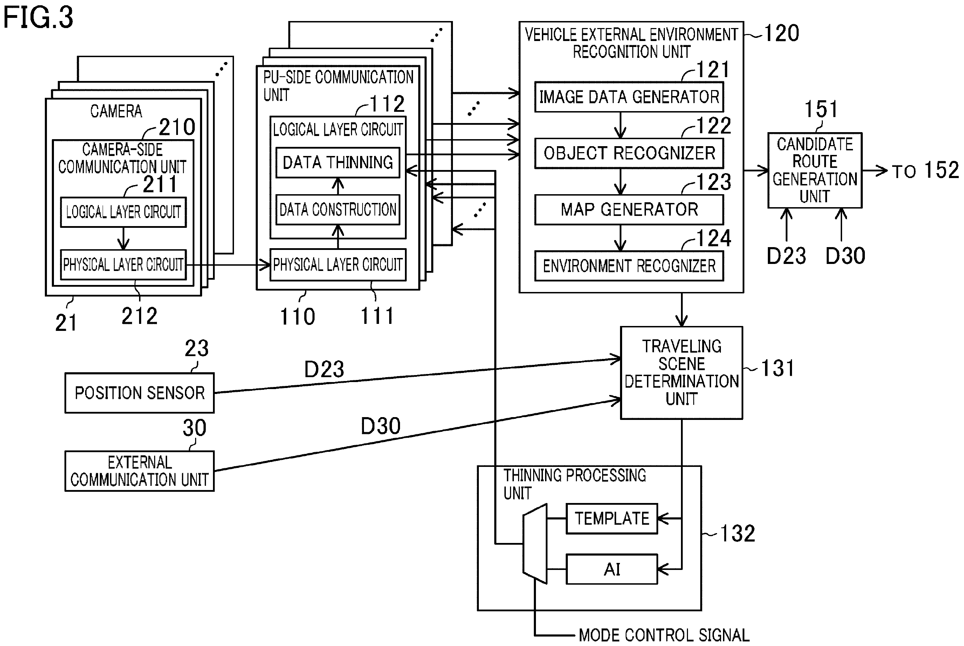

As shown in FIG. 3, the camera-side communication unit 210 includes: a logical layer circuit 211 that constructs data rows (e.g., data rows conforming to a communication standard or the like) from the image data generated in the imaging unit 215; and a physical layer circuit 212 that converts the data rows constructed in the logical layer circuit 211 into the form of transmittable signals (e.g., analog signals) and outputs the signals to the arithmetic unit 100. Generally known configurations, such as a circuit configuration created in conformity with a communication standard (a standard on the transmitting side) and the like can be employed as specific configurations of the logical layer circuit 211 and the physical layer circuit 212 of the camera-side communication unit 210. Thus, detailed description thereof will be omitted herein. Each of the cameras 21 is an example of an external information acquisition device for acquiring information of a traveling scene of the vehicle 10, and an example of an imaging device for capturing images outside the vehicle 10.

The image data acquired by each of the cameras 21 is input not only to the arithmetic unit 100, but also to a human machine interface (HMI) unit 70. The HMI unit 70 displays information based on the image data acquired, on a display device or the like in the vehicle.

Similarly to the cameras 21, the radars 22 are arranged so that the detection range covers 360° of the vehicle 10 in the horizontal direction. The type of the radars 22 is not particularly limited. For example, a millimeter wave radar may be adopted. Each of the radars 22 is an example of the external information acquisition device for acquiring information of a traveling scene of the vehicle 10. Although not specifically shown in the drawings, each of the radars 22 may be an imaging radar or a laser radar capable of capturing images. Similarly to the cameras 21, each of the radars 22 may be configured to generate image data and output the image data to a PU-side communication unit 110 of the arithmetic unit 100 via a sensor-side communication unit having a logical layer circuit and a physical layer circuit. In such a case, the radar 22 corresponds to an imaging device for capturing images of the external environment of the vehicle 10.

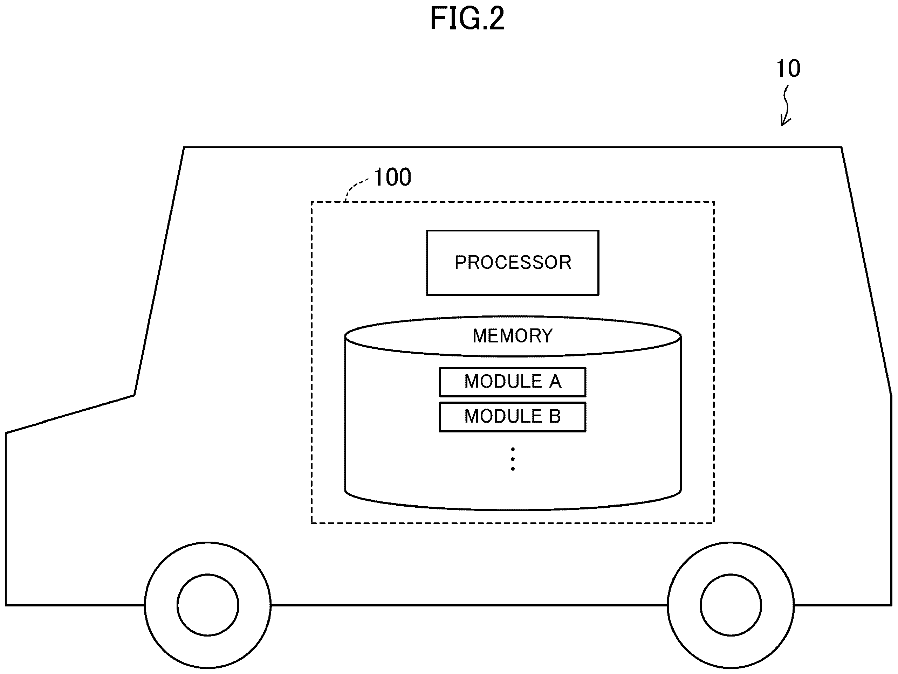

The arithmetic unit 100 determines a target motion of the vehicle 10 based on outputs from the sensing device 20, such as the cameras 21 and the radars 22, and on information received from a network outside the vehicle, calculates a driving force, a braking force, and a steering amount for achieving the determined target motion, and outputs a calculation result to a control unit 80 that controls an engine, a brake, or the like. In the example configuration illustrated in FIG. 2, the arithmetic unit 100 includes a processor and a memory. The memory stores modules each of which is a software program executable by the processor. The function of each unit of the arithmetic unit 100 shown in FIG. 1 is achieved, for example, by the processor executing the modules stored in the memory. In addition, the memory stores data of a model used by the arithmetic unit 100. Note that a plurality of processors and a plurality of memories may be provided. Part of the function of each unit of the arithmetic unit 100 shown in FIG. 1 may be achieved by a hardware circuit.

As shown in FIG. 1, to set the target motion of the vehicle 10, the arithmetic unit 100 includes: a PU-side communication unit 110 for receiving an output from a sensor-side communication unit such as the cameras 21; a vehicle external environment recognition unit 120 that recognizes the vehicle's external environment based on an output from the PU-side communication unit 110; a candidate route generation unit 151 that calculates one or more candidate routes that can be traveled by the vehicle 10, in accordance with the vehicle's external environment recognized by the vehicle external environment recognition unit 120; a vehicle behavior estimation unit 152 that estimates the behavior of the vehicle 10 based on an output from the vehicle status sensor 24; an occupant behavior estimation unit 153 that estimates the behavior of an occupant on the vehicle 10 based on an output from the occupant status sensor 25; a route decision unit 154 that decides a route to be traveled by the vehicle 10; and a vehicle motion decision unit 155 that decides the target motion of the vehicle 10 so that the vehicle 10 follows the route set by the route decision unit 154.

As shown in FIG. 3, the arithmetic unit 100 further includes: a traveling scene determination unit 131 that determines a traveling scene of the vehicle 10; and a thinning processing unit 132 that decides a thinning method corresponding to the traveling scene determined by the traveling scene determination unit 131 and that executes thinning processing based on the thinning method.

### <PU-side Communication Unit>

The PU-side communication unit 110 receives, from the imaging device, such as the cameras 21 and the radars 22, an imaging signal including the information on the imaging by the imaging device, constructs a data row for generating image data, and outputs the data row to the vehicle external environment recognition unit 120. The number of the PU-side communication units 110 may be the same as that of the cameras 21 or the radars 22 so as to be connected to the cameras 21 or the radars 22 on a one-on-on basis.

As shown in FIG. 3, each of the PU-side communication units 110 includes a physical layer circuit 111 that receives an imaging signal from the imaging device, and a logical layer circuit 112 that constructs a data row for generating image data from the imaging signal that has been received in the physical layer circuit 111. In each PU-side communication unit 110, the logical layer circuit 112 constructs a data row and, upon receipt of a "data thinning" command from a thinning processing unit, which will be described later, thins some pieces of data from the data row constructed, and outputs the remaining data row. Specific examples of the "data thinning" operations will be described later. Generally known configurations, such as a circuit configuration created in conformity with a communication standard (a standard on the transmitting side) and the like can be employed as specific configurations of the physical layer circuit 111 of the PU-side communication unit 110 and the logical layer circuit 112 of the PU-side communication unit 110 excluding the data thinning section. Thus, detailed description thereof will be omitted herein.

The physical layer circuit 111 and logical layer circuit 112 of the PU-side communication unit 110 are examples of the physical layer circuit and logical layer circuit of the external environment recognition device, respectively.

### <Vehicle External Environment Recognition Unit>

The vehicle external environment recognition unit 120 recognizes the vehicle's external environment based on an output from each PU-side communication unit 110. The vehicle external environment recognition unit 120 includes an image data generator 121, an object recognizer 122, a map generator 123, and an environment recognizer 124.

The image data generator 121 generates image data from the data row output from the PU-side communication unit 110. In other words, the image data generator 121 performs processing of reconstructing the image data captured by the cameras 21 or the radars 22 (e.g., image radars) and regenerating the image data based on the results of image capturing by the cameras 21 or the radars 22. The image data can be generated by generally known methods. Thus, detailed description thereof will be omitted herein.

The object recognizer 122 recognizes what an object outside the vehicle is, based on the image data generated in the image data generator 121 and on a peak list of reflected waves received from the radars 22, for example. For example, the object recognizer 122 detects an object outside the vehicle based on the image data or the peak list, identifies the object outside the vehicle, using identification information or the like in a database or the like stored in the arithmetic unit 100, and recognizes the object as "information of object outside vehicle." In addition, the object recognizer 122 receives outputs from the radars 71 and acquires "positioning information of target" including, e.g., the position and speed of the target present around the vehicle 1, as the "information of object outside vehicle." The object outside the vehicle may be identified by a neural network or the like. Alternatively, the position and speed of the object outside the vehicle may be obtained from the output information from respective sensors.

The map generator 123 compares three-dimensional information of the surroundings of the vehicle 10 with a vehicle external environment model, based on the information of object outside the vehicle which has been recognized in the object recognizer 122, thereby recognizing the vehicle's external environment, including the road and obstacles, to create a map. The vehicle external environment model is, for example, a learned model generated by deep learning, and allows recognition of a road, an obstacle, and the like with respect to the three-dimensional information of the surroundings of the vehicle. The map generator 123 may generate three- or two-dimensional map of the surroundings, or both of such maps.

Specifically, for example, the map generator 123 identifies a free space, that is, an area without an object, based on the information of object outside the vehicle which has been recognized in the object recognizer 122. In this processing, for example, a learned model generated by deep learning is used. The map generator 123 generates a two-dimensional map that represents the free space. The map generator 123 also generates a three-dimensional map that represents the surroundings of the vehicle 10, using the positioning information of target. In this process, information of the installation positions and shooting directions of the cameras 21, and information of the installation positions and the transmission direction of the radars 22 are used.

The environment recognizer 124 compares the three-dimensional map generated by map generator 123 with the vehicle's external environment model, thereby recognizing the vehicle's external environment including the road and obstacles. In the deep learning, a multilayer neural network, e.g., a deep neural network (DNN) is used. An example of the multilayer neural network is convolutional neural network (CNN).

The map generator 123 may generate a map by a method other than deep learning. For example, the map generator 123 may place the recognized object in three dimensions or two dimensions without using deep learning.

The information of the vehicle's external environment recognized in the vehicle external environment recognition unit 120 is output to the candidate route generation unit 151 and the traveling scene determination unit 131. The candidate route generation unit 151 generates candidate routes that can be traveled by the vehicle 10, based on the outputs from the vehicle external environment recognition unit 120, the outputs from the position sensor 23, the information transmitted from an external network via the external communication unit 30, for example.

The image data generator 121 and the map generator 123 of the vehicle external environment recognition unit 120 are examples of an environmental data generator of the external environment recognition device.

### <Traveling Scene Determination Unit>

The traveling scene determination unit 131 determines the traveling scene of the vehicle 10 based on at least one of the following: information of the map generated in the vehicle external environment recognition unit 120; information of the vehicle's external environment including the road and obstacles; results of the detection made by the position sensor 23; information received from an external network or the like via the external communication unit 30. The sensing device 20, including the position sensor 23, and the external communication unit 30 are examples of the external information acquisition device.

The determination of the traveling scene of the vehicle 10 includes, for example, determination of a place, circumstances, or the like where the vehicle 10 is traveling. For example, a traveling scene in which the vehicle 10 is currently traveling may be determined as the traveling scene by checking, e.g., the number or density of surrounding vehicles and people, based on the information captured by the cameras 21 or the like. Alternatively, a traveling scene may be determined in accordance with a place where the vehicle 10 is traveling, e.g., an urban area, a suburb, and an expressway, based on information from the position sensor 23 or an automotive navigation system, information from an external network, or the like.

The traveling scene determination unit 131 is an example of a movement scene determination unit of the external environment recognition device.

In the above description, the environment recognizer 124 may be omitted from the vehicle external environment recognition unit 120. In such a case, for example, the object recognizer 122 may be used to recognize (classify) obstacles and road compositions, and acquire the surrounding road environment based on the recognition result; and the traveling scene determination unit 131 may determine the cruise traveling scene based on the information of the map generated in the map generator 123 and the result of the recognition made by the object recognizer 122.

### <Thinning Processing Unit>

The thinning processing unit 132 decides a thinning method corresponding to the traveling scene determined in the traveling scene determination unit 131, and executes thinning processing on at least one of the data row constructed in the logical layer circuit 112 or the image data generated in the image data generator. FIG. 3 shows an example in which the thinning processing unit 132 performs the thinning processing on the data row constructed in the logical layer circuit 112.

In the example of FIG. 3, the thinning processing unit 132 has, in order to decide the thinning method, (1) a decision module based on a template and (2) a decision module using artificial intelligence (AI), and selects either one of these decision modules based on a mode control signal from external equipment. How the thinning method is decided is not particularly limited. Other methods, such as using one of the method (1) or the method (2), may also be employed.

The above item (1), i.e., the "decision module based on a template" includes, for example, a template in the form of list in which traveling scenes determined in the traveling scene determination unit 131 and thinning methods corresponding to the respective traveling scenes are listed, so that the thinning method be decided in accordance with the output from the traveling scene determination unit 131. The thinning method is not particularly limited, and various known thinning methods can be adopted as the thinning method. For example, in a case of thinning an image, the thinning method involves a region in the image to be thinned and a corresponding thinning rate for the region, whether or not to perform thinning for each frame, and a thinning rate if the thinning is performed for each frame, and so on. The above item (2), i.e., the "decision module using AI" may use a learned model generated by deep learning, for example.

The method for thinning data using the logical layer circuit 112 is not particularly limited. For example, in a case in which a data row is separated into packets, example methods would be that a flag indicating the importance or whether or not thinning is allowed is set on each packet so that data be thinned based on the flag, or that after reconstruction of the data row, the reconstructed data is thinned using a timer or the like at a specific cycle for a specific period. There are various known methods for thinning image data, which can be appropriately employed. Thus, detailed description thereof will be omitted herein.

The phase in which the thinning processing is performed is not particularly limited. For example, as illustrated in FIG. 3, the thinning may be performed by the logical layer circuit 112 of the PU-side communication unit 110, or may be performed in a higher level of layer. Alternatively, the thinning processing may be performed in the course of image data generation in the vehicle external environment recognition unit 120, or may be performed in the course of object recognition in the object recognizer 122 or in the course of map generation in the map generator 123. In a case in which the map generator 123 updates the maps sequentially, the map information may undergo the thinning processing.

The thinning processing unit 132 is an example of the thinning processing unit of the external environment recognition device. Part of the thinning processing unit of the external environment recognition device may be provided in another block. For example, in a case of performing thinning processing on the data row constructed in the logical layer circuit 112, part of the thinning processing unit may be provided in the logical layer circuit 112 of the PU-side communication unit 110.

### (Operation of External Environment Recognition Device)

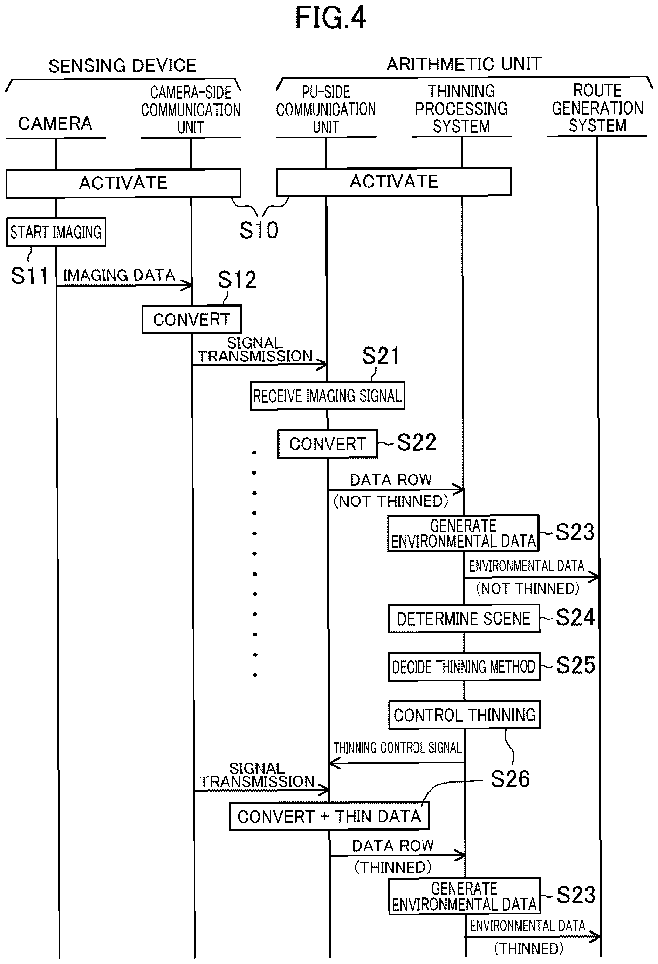

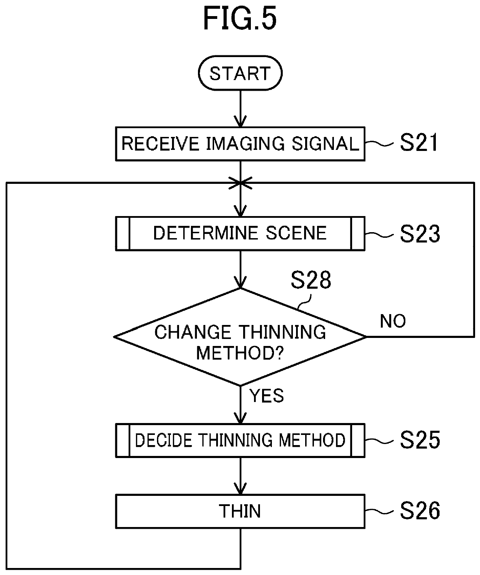

Next, the operation of the external environment recognition device will be described with reference to the flowcharts of FIGS. 4 and 5. In FIG. 4, for convenience of explanation, blocks subsequent to the block of the PU-side communication unit of the arithmetic unit 100 are divided into a block of a thinning processing system and a block of a route generation system. However, this figure is not intended to limit the scope of the present invention.

First, the sensing device 20 and the arithmetic unit 100 are activated (Step S10); image capturing by the cameras 21 is started (Step S11); and imaging data is transmitted from the cameras 21 to the camera-side communication unit 210.

In Step S12, the camera-side communication unit 210 receives the imaging data, converts the imaging data into an imaging signal in a transmittable form, and outputs the imaging signal to the PU-side communication unit 110. Specifically, in the camera-side communication unit 210, the logical layer circuit 211 converts the imaging data into a transmittable data row, encodes the imaging date, or perform any other processing, and the physical layer circuit 212 performs digital-to-analog conversion, and outputs the converted signal to the PU-side communication unit 110.

In the PU-side communication unit 110, the physical layer circuit 111 receives the imaging signal (Step S21) and performs analog-to-digital conversion, and the logical layer circuit 112 decodes the signal or constructs a data row (Step S22) and outputs the decoded signal or the data row to the vehicle external environment recognition unit 120.

In the subsequent Step S23, the vehicle external environment recognition unit 120 performs processing from the generation of image data to the recognition of the vehicle's external environment, based on the data row transmitted from the logical layer circuit 112. The information on the vehicle's external environment recognized is output to the candidate route generation unit 151 and the traveling scene determination unit 131. The candidate route generation unit 151 calculates one or more candidate routes that can be traveled by the vehicle 10, based on the information on the vehicle's external environment transmitted from the vehicle external environment recognition unit 120.

In Step S24, the traveling scene determination unit 131 determines a traveling scene based on the information on the vehicle's external environment transmitted from the vehicle external environment recognition unit 120. In the subsequent Step S25, the thinning processing unit 132 decides a thinning method corresponding to the traveling scene.

For example, the traveling scene determination unit 131 determines a place or circumstances where the subject vehicle 10 is traveling as the traveling scene, based on the image data captured by the cameras 21, the position information of the subject vehicle obtained by the position sensor 23, information received from a network outside the vehicle, or the like. The thinning processing unit 132 then decides a thinning method corresponding to the place or circumstances determined by the traveling scene determination unit 131.

More specifically, for example, under the circumstances in which the subject vehicle 10 is traveling alone in a suburb or an expressway where there are few obstacles around the vehicle and it is less likely that a person runs into the road, a relatively high thinning rate may be employed in the thinning method. On the other hand, under the circumstances in which the subject vehicle 10 is traveling in an urban area where there are many events around the vehicle which require attention, a relatively low thinning rate may be employed in the thinning method.

Further, for example, the traveling scene determination unit 131 may determine a traveling speed of the vehicle 10 based on the output from the vehicle status sensor 24, and the thinning processing unit 132 may perform processing in which the thinning rate of the thinning processing increases as the moving speed decreases, as the thinning method. For example, the thinning rate may be set to be relatively high when the vehicle is traveling at reduced speed, whereas the thinning rate may be set to be relatively low when the vehicle is traveling normally in urban areas or the like. Excessive data processing is therefore avoided while the vehicle 10 is traveling at low speed. On the other hand, since the thinning rate is set to be relatively low while the vehicle 10 is traveling at high speed, it is possible to perform processing, such as route generation, with the least possible loss of information necessary for safe traveling.

Further, for example, when the traveling scene determination unit 131 determines that the vehicle 10 is in the stopping or parking operation, the thinning processing unit 132 may perform processing in which the thinning rate of the thinning processing is set to be higher than in the normal traveling of the vehicle, as the thinning method. Since the vehicle travels at relatively low speed during stopping or parking, the higher thinning rate can avoid excessive data processing during the stopping or parking of the vehicle 10. In addition, for example, while the vehicle 10 is moving backward during stopping or parking, the thinning rate of the image data from the cameras 21 imaging frontward of the vehicle 10 may be set to be higher than the thinning rate of the image data from the other cameras in order to avoid excessive data processing. Under circumstances in which it is clear that there is no roadway, sidewalk, nor roadside zone or the like on the left side of the vehicle and hence it is far less likely that an object exists, the thinning rate on the left side of the vehicle may be increased.

In the subsequent Step S26, the thinning processing unit 132 transmits, to a target block, a thinning control signal indicating the decided thinning method. In the example of FIG. 3, the thinning processing unit 132 transmits the thinning control signal to the logical layer circuit 112 of the PU-side communication unit 110. The logical layer circuit 112 of the PU-side communication unit 110 performs data thinning based on the thinning control signal. From then on, thinned data will be output to the vehicle external environment recognition unit 120.

FIG. 5 is a flowchart focusing on an operation of the external environment recognition device. The same reference numerals as those in FIG. 4 are used for the corresponding steps in the flowchart of FIG. 5. Explanation of the same steps may be omitted in the following description.

FIG. 5 shows a case in which the thinning methods are appropriately changed. A process (Step S28) of confirming whether or not the thinning methods are changed is added between the determination of the traveling scene by the traveling scene determination unit 131 and the decision of the thinning method by the thinning processing unit 132.

For example, if the determination of the traveling scene by the traveling scene determination unit 131 is different from the previous result of determination (if it is "YES" in Step S28), the process proceeds to the above-described Step S25, in which a thinning method according to the newly determined traveling scene is decided, and the thinning processing is performed. On the other hand, if the method of the thinning processing is not changed, the process returns to Step S23.

Turning back to FIG. 1, the blocks subsequent to the block of the candidate route generation unit 151 will be briefly described below.

The vehicle behavior estimation unit 152 estimates a status of the vehicle from the outputs of the sensors which detect the behavior of the vehicle, such as a vehicle speed sensor, an acceleration sensor, and a yaw rate sensor. The vehicle behavior estimation unit 152 generates a six-degrees-of-freedom (6DoF) model of the vehicle indicating the behavior of the vehicle.

The occupant behavior estimation unit 153 particularly estimates the driver's health conditions and emotions from the results of the detection made by the occupant status sensor 25. The health conditions include, for example, good health condition, slightly fatigue, poor health condition, decreased consciousness, and the like. The emotions include, for example, fun, normal, bored, annoyed, uncomfortable, and the like.

The route decision unit 154 decides the route to be traveled by the vehicle 10 based on the outputs from the occupant behavior estimation unit 153. If the number of routes generated by the candidate route generation unit 151 is one, the route decision unit 154 decides this route to be the route to be traveled by the vehicle 10. If the candidate route generation unit 151 generates a plurality of routes, a route that an occupant (in particular, the driver) feels most comfortable with, that is, a route that the driver does not perceive as a redundant route, such as a route too cautiously avoiding an obstacle, is selected out of the plurality of candidate routes, in consideration of an output from the occupant behavior estimation unit 153.

The vehicle motion decision unit 155 decides a target motion for the travel route decided by the route decision unit 154. The target motion means steering and acceleration/deceleration for following the travel route. In addition, with reference to the 6DoF model of the vehicle, the vehicle motion decision unit 155 calculates the motion of the vehicle body for the travel route selected by the route decision unit 154.

A physical amount calculation unit calculates a driving force, a braking force, and a steering amount for achieving the target motion, and includes a driving force calculation unit 161, a braking force calculation unit 162, and a steering amount calculation unit 163. To achieve the target motion, the driving force calculation unit 161 calculates a target driving force to be generated by powertrain devices (the engine and the transmission). To achieve the target motion, the braking force calculation unit 162 calculates a target braking force to be generated by a brake device. To achieve the target motion, the steering amount calculation unit 163 calculates a target steering amount to be generated by a steering device.

A peripheral device operation setting unit 170 sets operations of body-related devices of the vehicle 10, such as lamps and doors, based on outputs from the vehicle motion decision unit 155. The devices include, for example, actuators and sensors to be controlled while the motor vehicle is traveling or while the motor vehicle is being stopped or parked.

### <Output Destination of Arithmetic Unit>

An arithmetic result of the arithmetic unit 100 is output to a control unit 80 and a body-related microcomputer 60. The control unit 80 includes a powertrain microcomputer 81, a brake microcomputer 82, and a steering microcomputer 83. Specifically, information related to the target driving force calculated by the driving force calculation unit 161 is input to the powertrain microcomputer 81. Information related to the target braking force calculated by the braking force calculation unit 162 is input to the brake microcomputer 82. Information related to the target steering amount calculated by the steering amount calculation unit 163 is input to the steering microcomputer 83. Information related to the operations of the body-related devices set by the peripheral device operation setting unit 140 is input to the body-related microcomputer 60. The steering microcomputer 83 includes a microcomputer for electric power assisted steering (EPAS).

In summary, the external environment recognition device of the present embodiment includes: a PU-side communication unit 110 having a physical layer circuit 111 that receives an imaging signal from cameras 21 and a logical layer circuit 112 that constructs a data row based on the imaging signal received in the physical layer circuit 111; an image data generator 121 that generates image data of the outside of a vehicle 10 from the data row constructed in the logical layer circuit 112; a traveling scene determination unit 131 that determines a traveling scene of the vehicle 10 based on the image data; and a thinning processing unit 132 that decides a thinning method corresponding to the traveling scene determined in the traveling scene determination unit 131 and that performs thinning processing of at least one of the data row or the image data.

According to the external environment recognition device described above, the traveling scene determination unit 131 determines a traveling scene; a thinning method is decided based on the result of the determination; and thinning processing is performed by the decided thinning method. That is, unnecessary portion, if any, can undergo the thinning processing when it has turned out which type of traveling scene the data represents, in other words, when it has turned out whether the data represents circumstances where thinning causes no problem. Thus, the amount of data to be processed by the arithmetic unit can be reduced without losing necessary information.

The thinning processing of a data row does not have to be performed at a location where the data row has been constructed, e.g., in the logical layer circuit 112 in the above embodiment, but may be executed in a layer or a block subsequent thereto. The same applies to the image data.

In the thinning processing, data in a specific region around the vehicle may be thinned. For example, under circumstances in which it is far less likely that an object exists on the left side of the vehicle, the thinning rate for that region may be reduced.

It has been described in the above embodiment that the external environment of the vehicle 10 is recognized based on images captured by the cameras 21, but the present disclosure is not limited thereto. For example, in addition to or instead of the images captured by the cameras 21, external environment information including intersection information, specific road structure information, and the like may be received from an external network through external communication via the external communication unit 30.

### INDUSTRIAL APPLICABILITY

The technology disclosed herein is useful as an external environment recognition device that recognizes an external environment of an autonomous mobile object.

### DESCRIPTION OF REFERENCE CHARACTERS

- 10: Vehicle
- 21: Camera (Imaging Device, External Information Acquisition Device)
- 100: Arithmetic Unit
- 111: Physical Layer Circuit
- 112: Logical Layer Circuit
- 121: Image Data Generator (Environmental Data Generator)
- 131: Traveling Scene Determination Unit (Movement Scene Determination Unit)
- 132: Thinning Processing Unit

## Claims

1. An external environment recognition device that recognizes an external environment of an autonomous mobile object, the external environment recognition device comprising:
a physical layer circuit that receives an external environment signal from an external information acquisition device that acquires external environment information of the autonomous mobile object, the external environment signal including the external environment information;
a logical layer circuit that constructs a data row based on the external environment signal received in the physical layer circuit;
an environmental data generator that generates environmental data of the autonomous mobile object from the data row;
a movement scene determination unit that determines a movement scene of the autonomous mobile object based on the environmental data; and
a thinning processing unit that decides a thinning method corresponding to the movement scene determined in the movement scene determination unit and that performs thinning processing on at least one of the data row or the environmental data.

2. An external environment recognition device that recognizes an external environment of an autonomous mobile object, the external environment recognition device comprising:
a physical layer circuit that receives an imaging signal of an imaging device that captures an outside of the autonomous mobile object;
a logical layer circuit that constructs a data row from the imaging signal received in the physical layer circuit;
an image data generator that generates image data from the data row;
a movement scene determination unit that determines a movement scene based on an output of an external information acquisition device that acquires external environment information of the autonomous mobile object; and
a thinning processing unit that decides a thinning method corresponding to the movement scene determined in the movement scene determination unit and that performs thinning processing on at least one of the data row or the image data.

3. The external environment recognition device of claim 1 or 2, wherein
the movement scene determination unit determines a moving speed of the autonomous mobile object as the movement scene of the autonomous mobile object, and
as the thinning method, the thinning processing unit increases a thinning rate of the thinning processing as the moving speed decreases.

4. The external environment recognition device of claim 1 or 2, wherein
as the thinning method, the thinning processing unit sets a thinning rate of the thinning processing to be higher when the movement scene determination unit determines, as the movement scene, that a vehicle as the autonomous mobile object is being stopped or parked, than when the vehicle is traveling normally.
